# EUROPÄISCHE PATENTSCHRIFT

(11) **EP 2 193 399 B1**
(45) Veröffentlichungstag und Bekanntmachung des Hinweises auf die Patenterteilung: **15.06.2011**
(21) Anmeldenummer: 08854438.2
(22) Anmeldetag: 03.11.2008
(51) Int. Cl.: G02B 21/24, G02B 21/26

(54) **OPTIKWECHSLER**
OPTICS CHANGER
DISPOSITIF DE CHANGEMENT D'OPTIQUE

(30) Priorität: 29.11.2007 DE 102007057436
(43) Veröffentlichungstag der Anmeldung: 09.06.2010
(73) Patentinhaber: Carl Zeiss MicroImaging GmbH, 07745 Jena (DE)
(72) Erfinder: MITZKUS, Reiner, 37085 Göttingen (DE); SCHNÜLL, Peter, 37130 Gleichen (DE); BAUER, Frank, 37130 Gleichen (DE); WOLF, Uwe, 99441 Magdala (DE); WAHL, Hubert, 07646 Stadtroda (DE)
(74) Vertreter: Geyer, Fehners & Partner
(86) Internationale Anmeldenummer: PCT/EP2008/009246
(87) Internationale Veröffentlichungsnummer: WO 2009/068153

(56) Entgegenhaltungen:
- EP-A- 0 055 209
- WO-A-2004/055571
- DE-A1- 10 250 567
- DE-A1-102006 024 109

## Beschreibung

Die vorliegende Erfindung bezieht sich auf einen Optikwechsler zum Anordnen eines Optikelements in einer Sollposition in einem von außen über einen Einschubkanal zugänglichen Wechselraum einer Optikvorrichtung.

Bei Optikvorrichtungen, wie z.B. Mikroskopen, ist es häufig gewünscht, daß der Kunde selbst ein Optikelement auswechseln kann (z.B. im Strahlengang im Objektivrevolverträger eines Mikroskops). Dabei besteht häufig die Schwierigkeit, daß der verfügbare Bauraum der Optikvorrichtung zwar das Optikelement aufnehmen könnte, jedoch dieser Bauraum von außen kaum zugänglich ist. Daher wird bei Optikvorrichtungen häufig keine Möglichkeit für den Kunden vorgesehen, ein Optikelement auszutauschen. Wenn die Optikvorrichtung dennoch eine Möglichkeit für einen solchen Austausch aufweist, ist dieser häufig sehr schwierig durchzuführen. So müssen in der Regel diverse Komponenten demontiert werden, um das Optikelement anzuordnen. Diese Komponenten müssen natürlich danach wieder montiert werden, was ein schnelles und kundenfreundliches Wechseln stark einschränkt.

Ausgehend hiervon ist es Aufgabe der vorliegenden Erfindung, einen Optikwechsler zum Anordnen eines Optikelements in einer Sollposition in einem von außen über einen Einschubkanal zugänglichen Wechselraum einer Optikvorrichtung vorzusehen, mit dem ein einfaches Anordnen des Optikelements in der Sollposition möglich ist.

Die Aufgabe wird gelöst durch einen Optikwechsler zum Anordnen eines Optikelements in einer Sollposition in einem von außen über einen Einschubkanal zugänglichen Wechselraum einer Optikvorrichtung, mit einem Grundrahmen und dem Optikelement, das über eine Schwenkmechanik schwenkbar am Grundrahmen befestigt ist, wobei die Schwenkmechanik beim Einschieben des Optikwechslers durch den Einschubkanal in den Wechselraum ab einer vorbestimmten Einschubtiefe eine Schwenkbewegung des Optikelements so bewirkt, daß nach Abschluß des Einschiebens das Optikelement in die Sollposition geschoben und geschwenkt ist.

Mit einem solchen Optikwechsler ist es möglich, das Optikelement in der Sollposition im Wechselraum anzuordnen, selbst wenn der Einschubkanal kleinere Abmessungen aufweist als der Wechselraum. Es ist also möglich, die Größe des Einschubkanals zu minimieren, wodurch auch bei komplexen Optikvorrichtungen, bei denen wenig Raum für den Einschubkanal gegeben ist, ein Wechseln des Optikelements durch den Kunden ermöglicht wird.

Das Einschieben ist bevorzugt eine lineare Bewegung, so daß der Kunde bzw. Benutzer den Optikwechsler nur durch den Einschubkanal einführen muß, um das Optikelement in der Sollposition anzuordnen.

Der Wechsler kann so ausgebildet sein, daß bei dem Einschieben des Wechslers bis zur vorbestimmten Einschubtiefe die Schwenkmechanik ein Schwenken bzw. Drehen des Optikelementes relativ zum Grundrahmen verhindert. Somit führt das Optikelement bis zur vorbestimmten Einschubtiefe nur die Einschubbewegung (zusammen mit dem Grundrahmen) aus. Erst ab der vorbestimmten Einschubtiefe bewirkt die Schwenkmechanik, daß das Optikelement zusätzlich zur Einschubbewegung (zusammen mit dem Grundrahmen) noch eine Schwenkbewegung relativ zum Grundrahmen durchführt, um so in die Sollposition zu gelangen.

Insbesondere weist der Optikwechsler eine Führung für die Einschub- und/oder Schwenkbewegung auf. Diese Führung kann beispielsweise durch den Einschubkanal selbst ausgebildet sein. Auch kann der Wechselraum bzw. Teile davon als Führung verwendet werden.

Der Optikwechsler kann eine Halteeinheit aufweisen, die das Optikelement in der Sollposition hält. Damit wird sichergestellt, daß das einmal in der Sollposition angeordnete Optikelement dauerhaft in dieser verbleibt.

Insbesondere kann die Halteeinheit das Optikelement in der Sollposition gegen einen Anschlag des Optikwechslers drücken. Dies kann beispielsweise mittels einer Feder erfolgen, so daß eine gewünschte Arretierung in der Sollposition vorliegt.

Bei dem Optikwechsler kann die Schwenkmechanik beim Einschieben des Optikwechslers bis zur vorbestimmten Einschubtiefe das Optikelement in einer Verschiebelage arretieren und erst ab der vorbestimmten Einschubtiefe die Schwenkbewegung aus der Verschiebelage bewirken. Damit können der Platzbedarf des Optikwechslers im Einschubkanal und somit die Abmessung des Einschubkanals selbst minimiert werden.

Insbesondere kann die Verschiebelage eine parallele Ausrichtung zu einer Ebene sein, in der die Verschiebebewegung stattfindet. Bei einer horizontalen Verschiebung kann somit das Optikelement horizontal ausgerichtet sein.

Der Grundrahmen des Optikwechslers kann zwei parallele Schenkel aufweisen, zwischen denen das Optikelement so angeordnet ist, daß die Schwenkachse senkrecht zur Erstreckungsrichtung der beiden Schenkel liegt. Dies ist eine besonders einfache Ausgestaltung des Grundrahmens, der, in einer Draufsicht gesehen, im wesentlichen U-förmig ausgebildet sein kann.

Bei dem Optikwechsler kann die Verschiebelage in der Ebene liegen, in der sich die beiden Schenkel erstrecken. In der Sollposition kann das Optikelement gegenüber dieser Ebene gekippt sein. Insbesondere kann diese Kippung 45° betragen. In diesem Fall kann das Optikelement als Strahlteiler bzw. teiltransparente Platte ausgebildet sein.

Das Optikelement kann in einem Aufnahmerahmen angeordnet sein, der drei Anlageflächen aufweist, die in der Sollposition an einer Führungsfläche im Wechselraum anliegen. Damit kann eine eindeutig bestimmte Positionierung des Aufnahmerahmens in der Sollposition verwirklicht werden.

Die Schwenkmechanik kann so ausgebildet sein, daß die Schwenkachse parallel zur Einschubrichtung in den Einschubkanal verläuft. Die Schwenkachse kann jedoch auch einen Winkel zwischen 0° und 90° mit der Einschubrichtung einschließen. Natürlich kann die Schwenkachse auch senkrecht zur Einschubrichtung verlaufen. Die Schwenkachse liegt bevorzugt in der Ebene (oder parallel dazu), in der das Optikelement während des Einschiebens durch den Einschubkanal bis zur vorbestimmten Einschubtiefe liegt und aus der es dann ab der vorbestimmten Einschubtiefe verschwenkt bzw. gedreht wird.

Der Optikwechsler kann ferner so ausgebildet sein, daß er genau in einer einzigen Ausrichtung in den Einschubkanal eingeschoben werden kann. Damit wird ein verdrehtes Einführen des Optikwechslers in den Einschubkanal verhindert.

Insbesondere kann das Optikelement in einem Aufnahmerahmen angeordnet sein, der relativ zum Grundrahmen längsverschieblich ist. In diesem Fall ist bevorzugt zwischen dem Aufnahmerahmen und dem Grundrahmen eine Feder angeordnet, die die beiden Rahmen auseinanderdrückt. Dies kann in der eingeschobenen Stellung des Optikwechslers dazu genutzt werden, um das Optikelement bzw. den Aufnahmerahmen federelastisch in der Sollposition zu arretieren.

Es wird ferner eine Optikvorrichtung, insbesondere ein Mikroskop, mit einem von außen über einen Einschubkanal zugänglichen Wechselraum bereitgestellt, wobei das Mikroskop einen erfindungsgemäßen Optikwechsler oder einen Optikwechsler gemäß einer erfindungsgemäßen Weiterbildung aufweist. Damit wird eine Optikvorrichtung bereitgestellt, bei der ein Optikelement leicht ausgewechselt werden kann.

Ferner wird ein Verfahren zum Anordnen eines Optikelements in einer Sollposition in einem von außen über einen Einschubkanal zugänglichen Wechselraum einer Optikvorrichtung bereitgestellt, bei dem das Optikelement von außen in den Einschubkanal geschoben und ab einer vorbestimmten Einschubtiefe ein weiteres Verschieben dazu führt, dass das Optikelement zusätzlich so verschwenkt wird, daß nach Abschluß des Einschiebens das Optikelement in die Sollposition geschoben und geschwenkt ist.

Mit dem erfindungsgemäßen Verfahren kann leicht das Optikelement im Wechselraum in der Sollposition positioniert werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine perspektivische Darstellung eines Optikwechslers gemäß einer ersten Ausführungsform;
- Fig. 2: eine Schnittdarstellung, die den teilweise in einen Objektivrevolverträger eines Mikroskops eingeschobenen Optikwechsler von Fig. 1 zeigt;
- Fig. 3: eine Schnittdarstellung, die den vollständig in den Objektivrevolverträger eingeschobenen Optikwechsler 1 zeigt;
- Fig. 4: eine perspektivische Darstellung des Optikwechslers 1 in der Einschubposition von Fig. 3;
- Fig. 5: eine perspektivische Teildarstellung des Optikwechslers von Fig. 4;
- Fig. 6: eine perspektivische Darstellung des teilweise eingeschobenen Optikwechslers 1;
- Fig. 7: eine perspektivische Darstellung des vollständig eingeschobenen Optikwechslers 1;
- Fig. 8: eine perspektivische Darstellung einer zweiten Ausführungsform des zweiten Optikwechslers 1;
- Fig.9: eine perspektivische Darstellung einer weiteren Ausführungsform des erfindungsgemäßen Optikwechslers;
- Fig. 10: eine Schnittdarstellung des teilweise in den Objektivrevolverträger eingeschobenen Optikwechslers von Fig. 9;
- Fig. 11: eine Schnittdarstellung des vollständig in den Objektivrevolverträger 11 eingeschobenen Optikwechslers von Fig. 9;
- Fig. 12: eine perspektivische Darstellung des Optikwechslers von Fig. 9 in der Einschubstellung von Fig. 11;
- Fig. 13: eine perspektivische Darstellung des teilweise eingeschobenen Optikwechslers von Fig. 9;
- Fig. 14: eine perspektivische Darstellung des vollständig eingeschobenen Optikwechslers von Fig. 9;
- Fig. 15: eine schematische Draufsicht eines Optikwechslers gemäß einer weiteren Ausführungsform, und
- Fig. 16: eine schematische Draufsicht eines Optikwechslers gemäß einer anderen Ausführungsform.

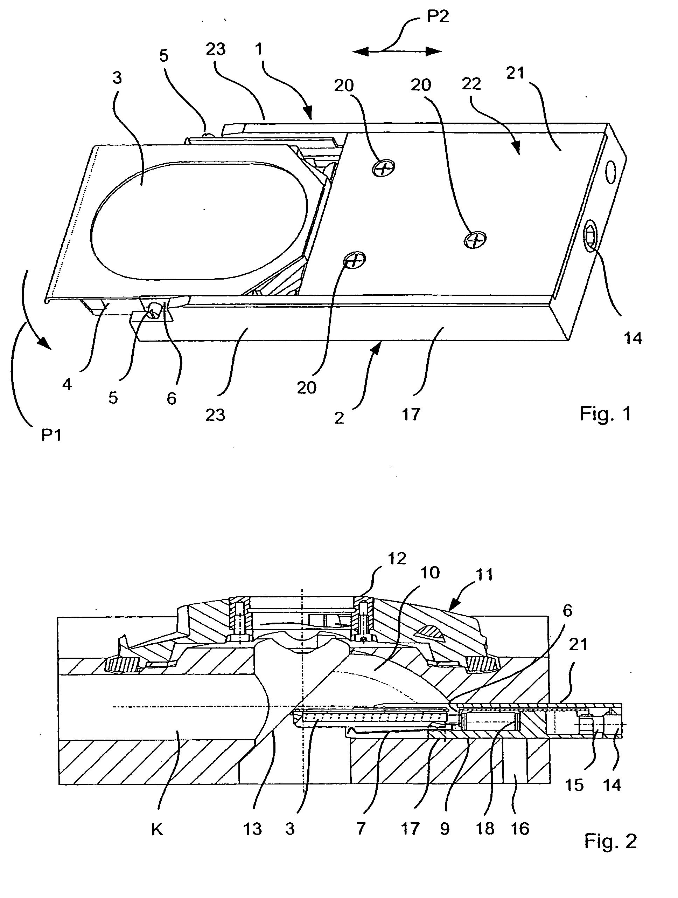

Der Optikwechsler 1 gemäß einer ersten Ausführungsform umfaßt einen Grundrahmen 2 (Fig. 1), der als Optikelement 3 einen Strahlteiler spannungsfrei trägt. Der Strahlteiler 3 sitzt in einem Aufnahmerahmen 4, der über Zylinderstifte 5 drehbar bzw. schwenkbar (Pfeil P1) an einem Zwischenrahmen 6 befestigt ist.

Der Zwischenrahmen 6 ist, wie nachfolgend noch detaillierter beschrieben wird, relativ zum Grundrahmen 2 in Längsrichtung (durch einen Doppelpfeil P2 in Fig. 1 angedeutet) verschiebbar.

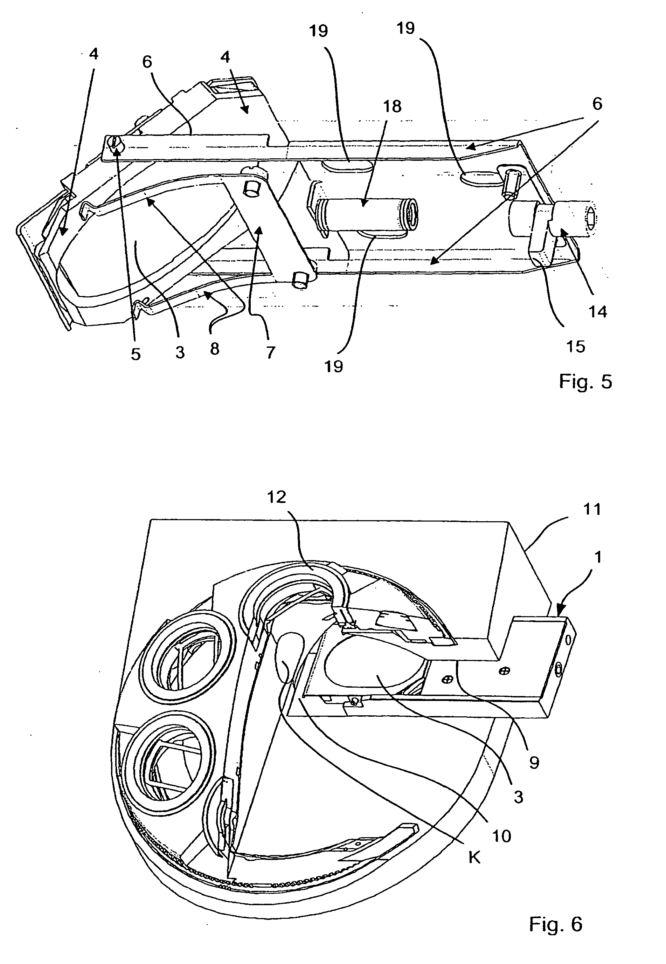

Wie insbesondere den Figuren 2 und 5 zu entnehmen ist, ist unten am Zwischenrahmen 6 eine im wesentlichen U-förmige erste Andruckfeder 7 befestigt, deren beide freien Schenkel 8 von unten gegen den Aufnahmerahmen 4 drücken, so daß der Strahlteiler in der in Fig. 1 gezeigten Ruhe- bzw. Transportstellung steht.

In Fig. 2 und 6 ist der Wechsler 1 in einem Zustand gezeigt, in dem er teilweise über einen Einschubkanal 9 in einen Wechselraum 10 eines Objektivrevolverträgers 11 eines Mikroskops eingeschoben ist, der eine Objektivanlagefläche 12 aufweist. Ferner umfaßt der Objektivrevolverträger 11 eine Führungsfläche 13 im Wechselraum 10, an die das vordere, leicht umgebogene Ende des Aufnahmerahmens 4 gerade anstößt. Ein weiteres Hineinschieben des Optikwechslers 1 führt dann dazu, daß das vordere Ende des Aufnahmerahmens 4 an der Führungsfläche 13 entlang nach unten ausweicht und somit der Aufnahmerahmen 4 eine Schwenkbewegung um die Achse der Zylinderstifte 5 durchführt. Das Optikelement 3 wird somit teilweise aufgerichtet.

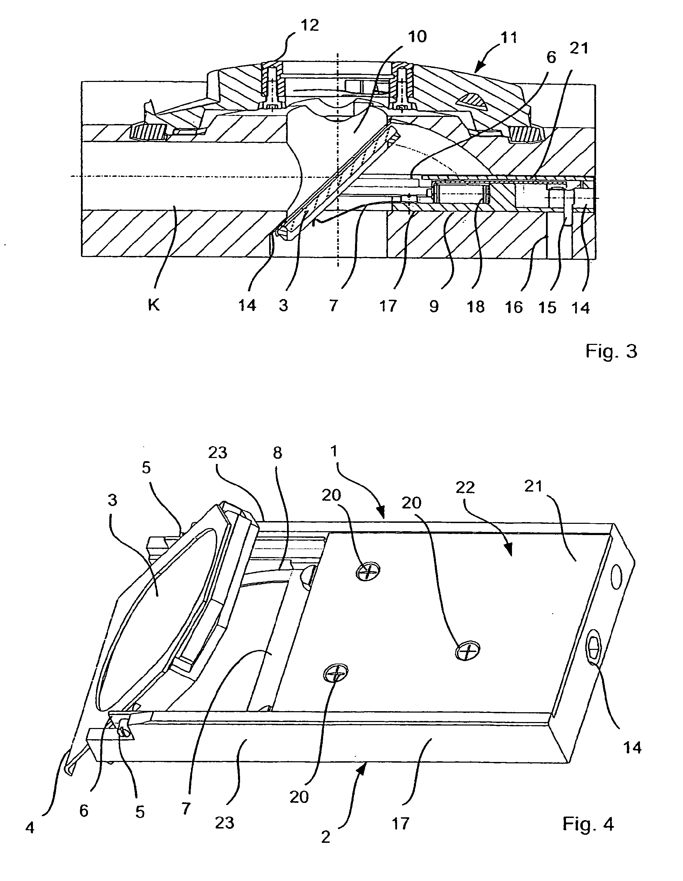

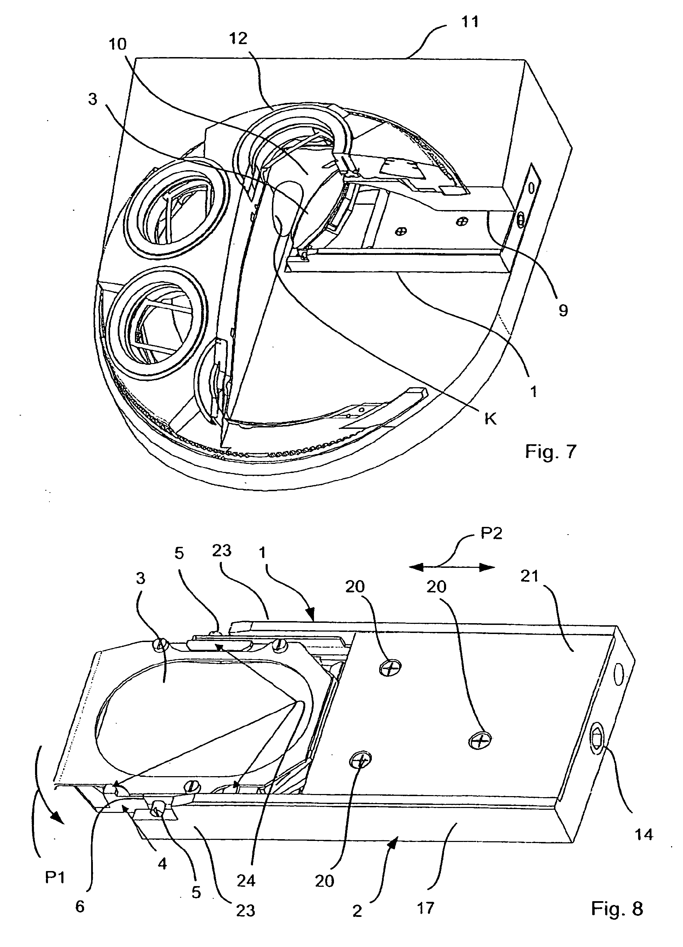

Der Optikwechsler 1 wird so lange weiter in den Wechselraum 10 eingeschoben, bis der Aufnahmerahmen 4 in der in Fig. 3 und 7 gezeigten Sollstellung an der Führungsfläche 13 anliegt.

Die Schwenkstellung des Aufnahmerahmens 4 in der Sollstellung ist auch in Fig. 4 und 5 ersichtlich, wobei für eine übersichtlichere Darstellung der Optikwechsler 1 ohne Objektivrevolverträger 11 gezeigt ist. In Fig. 5 ist ferner der Grundrahmen 2 nicht eingezeichnet.

Aufgrund der Schwenkbewegung wird die erste Andruckfeder 7 nach unten gedrückt, so daß die Rückstellkraft der ersten Andruckfeder 7 den Aufnahmerahmen 4 gegen die Führungsfläche 13 drückt. Um zu verhindern, daß dadurch der Optikwechsler 1 wieder aus dem Wechselraum 10 hinaus gedrückt wird, wird über eine Inbusschraube 14 ein Verriegelungsstift 15 in einen Verriegelungsschlitz 16 des Objektivrevolverträgers 11 eingedreht. Somit dient die Rückstellkraft der ersten Andruckfeder 7 zum Andrücken des Aufnahmerahmens 4 an die Führungsfläche 13.

Zusätzlich ist zwischen dem Zwischenrahmen 6 und einem Unterteil 17 des Grundrahmens 2 eine zweite Andruckfeder 18 vorgesehen, die bei der in Fig. 3 gezeigten Stellung dazu dient, den relativ zum Grundrahmen 2 in Längsrichtung verschiebbaren Zwischenrahmen 6 in Richtung hin zur Führungsfläche 13 zu drücken.

Somit wird der Aufnahmerahmen 4 im Bereich der Zylinderstifte 5 (durch die zweite Andruckfeder 18) und im Bereich der Kontaktstellen zwischen den Schenkeln 8 der Andruckfeder 7 und dem Aufnahmerahmen 4 gegen die Führungsfläche 13 gedrückt, wodurch die gewünschte Sollposition des Optikelementes sicher erreicht wird und beibehalten werden kann.

Die beiden Andruckfedern 7 und 18 bilden zusammen mit dem Verriegelungsstift 15, dem Grundrahmen 2, dem Zwischenrahmen 6 und dem Aufnahmerahmen 4 eine Halteeinheit, die das Optikelement 3 in der Sollposition hält.

Um die Längsverschieblichkeit des Zwischenrahmens 6 zum Grundrahmen 2 zu gewährleisten, weist der Zwischenrahmen 6 drei Langlöcher 19 auf (Fig. 5), durch die drei Befestigungsschrauben 20 (Fig. 1, 4) hindurch in das Unterteil 17 des Grundrahmens 2 eingeschraubt sind, um ein Oberteil 21 des Grundrahmens auf dem Unterteil 17 zu befestigen.

Durch diese Längsverschieblichkeit des Zwischenrahmens 6 relativ zum Grundrahmen 2 und durch die Tatsache, daß die Zylinderstifte 5 mit einem vorbestimmten Spiel im Zwischenrahmen 6 befestigt sind, kann sichergestellt werden, daß der Aufnahmerahmen 4 optimal in der gewünschten Sollposition an der Führungsfläche 13 anliegt.

Um den Optikwechsler 1 aus dem Objektivrevolverträger 11 zu entnehmen, muß lediglich der Verriegelungsstift 15 aus dem Verriegelungsschlitz 16 durch Drehen der Inbusschraube 14 herausgeschwenkt werden, so daß aufgrund der Rückstellkraft der ersten Andruckfeder 7 der Aufnahmerahmen 6 wieder in die horizontale Lage geschwenkt und dadurch zusammen mit der Rückstellkraft der zweiten Andruckfeder 18 eine lineare Bewegung des gesamten Optikwechslers 1 aus dem Objektivrevolverträger 11 bewirkt wird.

Wie in Fig. 1-7 ersichtlich ist, kann der Grundrahmen 2 einen im wesentlichen quader- bzw. plattenförmige Grundkörper 22 aufweisen, von dem sich zwei voneinander beabstandete Schenkel 23 erstrecken. Zwischen den Schenkeln 23 ist das Optikelement 3 drehbar bzw. schwenkbar um eine Achse gelagert, die im wesentlichen senkrecht zur Erstreckungsrichtung der Schenkel 23 verläuft. Die Schenkel 23 erstrecken sich bevorzugt in der Verschieberichtung beim Einschieben des Optikwechslers 1, so daß die in Fig. 1 gezeigte flache Ausbildung des Optikwechslers 1 möglich ist. Dadurch kann die Höhe des Einschubkanals 9 sehr klein sein, obwohl der Raumbedarf des Optikelementes 3 in der Sollposition in dieser Höhenrichtung (in Fig. 2 und 3 von unten nach oben) sehr viel größer ist.

Da Optikelement 3 dient in der in Fig. 3 gezeigten Stellung dazu, ein von links kommendes Lichtbündel von z.B. 835 nm, das durch einen Optikkanal K von außen zum Wechselraum 10 verläuft, um 90° nach oben umzulenken und somit in ein an der Objektivanlagefläche 12 befestigtes Objektiv (nicht gezeigt) einzukoppeln. Dazu steht das Optikelement 3 unter 45° zur optischen Mikroskopachse, die bei der Darstellung von Fig. 3 von oben nach unten verläuft.

Das Optikelement 3 kann als Schmalbandfilter, z.B. Kerb- oder Notchfilter, so ausgebildet sein, daß es Licht eines schmalen Wellenlängenbereiches reflektiert und Licht mit Wellenlängen außerhalb des schmalen Wellenlängenbereiches transmittiert. Insbesondere kann das Optikelement 3 so ausgebildet sein, daß in Fig. 3 von links kommendes schmalbandiges Licht mit einer Bandbreite von 15 - 50 nm und der Mittelwellenlänge von 835 nm um 90° nach oben umgelenkt wird. Das Licht durchläuft das Objektiv (nicht gezeigt) und wird an der zu untersuchenden Probe oder am Probenhalter (z.B. eine dünne Glasplatte) reflektiert und läuft über das Objekt zurück zum Optikelement 3 und wird von diesem dann nach links (in Fig. 3 gesehen) um 90° umgelenkt. Dieses umgelenkte Licht kann detektiert werden und für eine automatische Fokussierung des Mikroskops verwendet werden. Nachdem das Optikelement für sichtbares Licht (z.B. im Bereich von 340 - 780 nm) transparent ist, kann entlang der optischen Mikroskopachse (in Fig. 3 von unten nach oben) die gewünschte Untersuchung der Probe durchgeführt werden, da dieses sichtbare Licht vom Optikelement 3 transmittiert wird. Natürlich ist auch eine Detektion im Infrarotbereich möglich, da auch Licht bzw. elektromagnetische Strahlung mit Wellenlängen von größer als 890 nm vom Optikelement 3 transmittiert werden.

In Fig. 8 ist eine Abwandlung des Optikwechslers 1 von Fig. 1 dargestellt. In dieser Abwandlung weist der Aufnahmerahmen 4 drei Anlageflächen 24 auf, die bevorzugt so angeordnet sind, daß der Flächenschwerpunkt des Aufnahmerahmens 4 zusammen mit dem darin gehaltenen Strahlteiler 3 innerhalb des durch die drei Anlageflächen 24 aufgespannten Dreiecks liegt. Bevorzugt liegt der Schwerpunkt des Aufnahmerahmens 4 einschließlich des Strahlteilers 3 im Flächenschwerpunkt des durch die Anlageflächen 24 aufgestellten Dreiecks. Der Flächenschwerpunkt liegt bevorzugt in der Drehachse des Aufnahmerahmens 4.

Durch die Dreipunktauflage auf den Anlageflächen 24 liegt der Aufnahmerahmen 4 an der Führungsfläche 13 präzise an.

In einer Weiterbildung können die Anlageflächen 24 als Kugel bzw. Halbkugel ausgebildet werden.

Ferner können gemäß einer Weiterbildung anstatt der Andruckfedern 7 und 18 im Aufnahmerahmen 4 Magnete eingebaut werden, die beim Einschieben des Optikwechslers 1 den Aufnahmerahmen in die Sollposition ziehen und halten, wenn die Führungsfläche 13 magnetisch ist. Der Aufnahmeraum 10 ist dann bevorzugt so ausgebildet, daß beim Herausziehen des Optikwechslers der Aufnahmerahmen von der gekippten Stellung in die waagerechte Stellung zurückgeklappt wird, wobei im Grundrahmen 2 ein weiterer Magnet vorgesehen sein kann, der den Aufnahmerahmen 4 in der waagerechten Position hält.

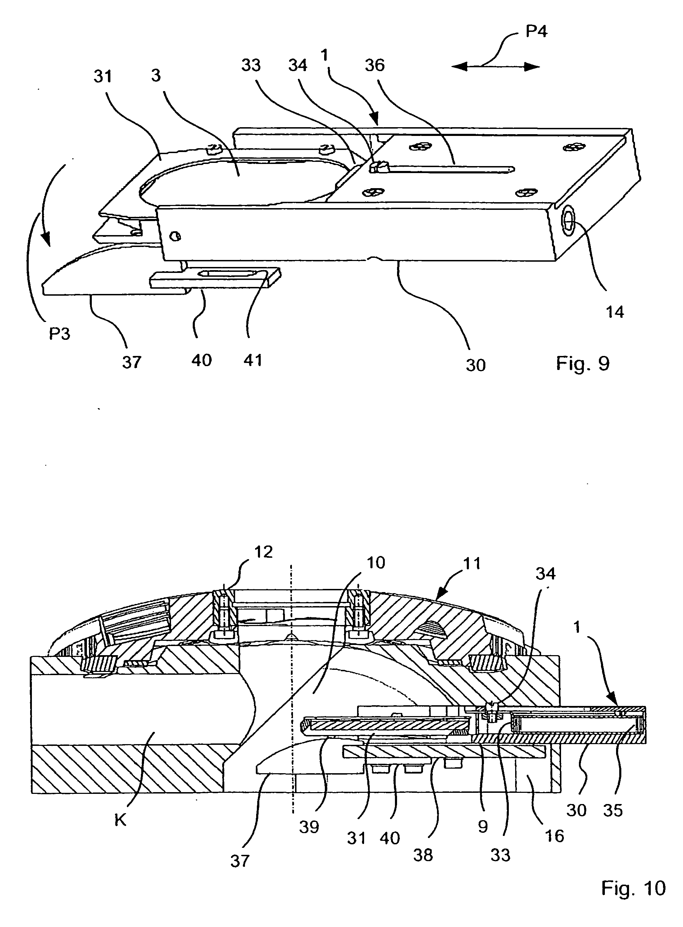

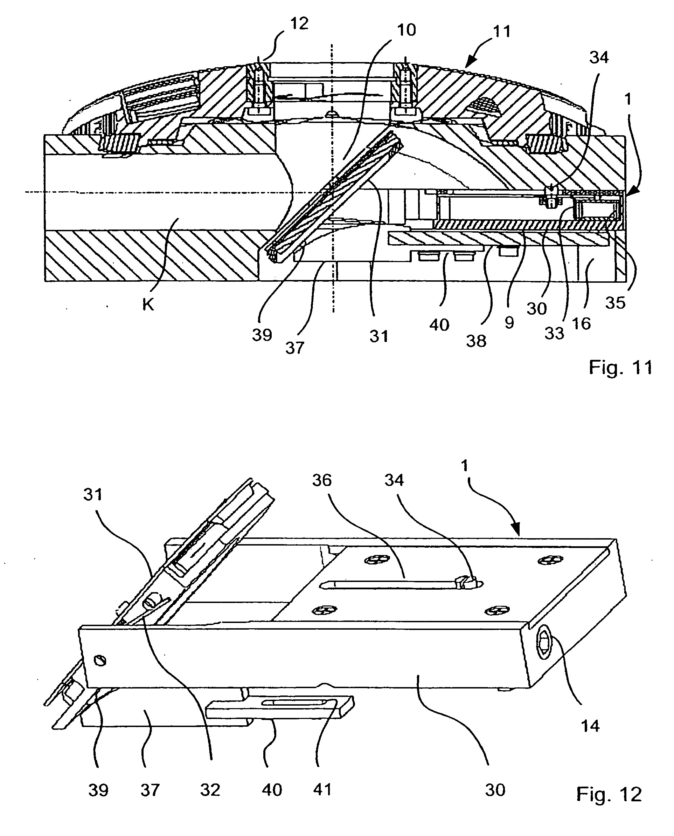

In Fig. 9 ist eine weitere Ausführungsform des erfindungsgemäßen Optikwechslers 1 gezeigt. Bei dieser Ausführungsform umfaßt der Optikwechsler einen Grundrahmen 30, in dem ein Aufnahmerahmen 31 für den Strahlteiler 3 direkt drehbar gelagert ist. Zwischen dem Aufnahmerahmen 31 und dem Grundrahmen 30 ist eine erste Andruckfeder 32 vorgesehen, die teilweise in der Darstellung von Fig. 12 ersichtlich ist und ein Verschwenken des Aufnahmerahmens 4 relativ zum Grundrahmen 30 bewirkt (Pfeil P3 in Fig. 9).

Um dieses Verschwenken in der in Fig. 9 gezeigten Grundstellung zu verhindern, ist ein Anschlagelement 33 vorgesehen. Das vordere Ende des Anschlagelements 33 übergreift den Aufnahmerahmen 31 und verhindert somit ein Drehen des Aufnahmerahmens 31 (Fig. 9). Das Anschlagelement 33 weist ein (nicht gezeigtes) Durchgangsloch auf, in das eine Verschiebeschraube 34 eingeschraubt ist, von der in Fig. 9 der Schraubenkopf sichtbar ist. Auf das dem Aufnahmerahmen 31 abgewandte Ende des Anschlagelementes 33 wirkt eine zweite Andruckfeder 35 (Fig. 10), deren anderes Ende am Grundrahmen 30 anliegt. Das Anschlagelement 33 ist im Grundrahmen 30 in Längsrichtung (Doppelpfeil P4) verschiebbar, wobei dazu für die Verschiebeschraube 34 ein sich in Längsrichtung erstreckendes Langloch 36 vorgesehen ist. Die zweite Andruckfeder 35 drückt das Anschlagelement 33 und somit die Verschiebeschraube 34 in die in Fig. 9 gezeigte Stellung, so daß der Aufnahmerahmen 31 in der horizontalen Transportlage fixiert ist.

Ferner ist in Fig. 9 eine Kurvenplatte 37 dargestellt, die im Objektivrevolverträger 11 an einer Befestigungsplatte 38 fixiert ist, wie z.B. Fig. 10 zu entnehmen ist.

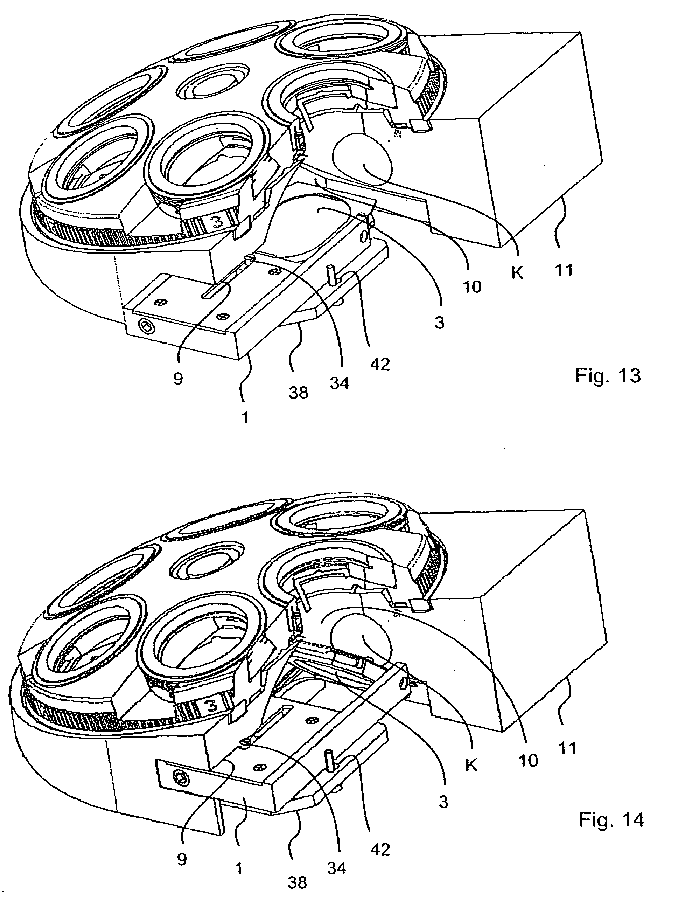

Wenn der Optikwechsler 1 von Fig. 9 in den Objektivrevolverträger 11 durch den Einschubkanal 9 eingeschoben wird, bleibt der Aufnahmerahmen 31 in der waagerechten Position bis zu der in Fig. 10 und 13 gezeigten Einschubtiefe. In dieser Verschiebestellung besteht bereits Kontakt zwischen einem an der unteren Seite des Aufnahmerahmens 31 befestigten Kontaktelement 39 und der Kurvenplatte 37, wie in Fig. 9 und 10 angedeutet ist. Ferner ist bei dieser Einschubtiefe im Einschubkanal 9 ein Anschlag (nicht gezeigt) für die Verschiebeschraube 34 vorgesehen, so daß bei einem weiteren Einschieben des Optikwechslers 1 die Verschiebeschraube 34 nicht mehr mit dem Optikwechsler 1 mitbewegt wird, und somit der Abstand zwischen der Verschiebeschraube 34 und dem hinteren Ende des Optikwechslers 1 geringer wird. Dadurch wird das Anschlagelement 33 zum hinteren Ende des Optikwechslers 1 verschoben, so daß der Aufnahmerahmen 31 nicht mehr durch das Anschlagelement 33 am Verschwenken gehindert wird.

Da aufgrund der ersten Andruckfeder 32 das Kontaktelement 39 auf die Kurvenplatte 37 gedrückt wird, führt ein weiteres Verschieben somit dazu, daß das Kontaktelement 39 auf der Kurvenplatte 37 nach unten gleitet und dadurch der Aufnahmerahmen 31 relativ zum Grundrahmen 30 verschwenkt wird, bis er in die in Fig. 11 gezeigte Sollposition gelangt. Diese Sollposition ist auch in der Darstellung von Fig. 12 ersichtlich.

Sobald der Optikwechsler 1 in der in Fig. 11 und 14 gezeigten Endstellung steht, in der der Aufnahmerahmen 31 und somit der Strahlteiler 3 in der Sollposition ist, kann mittels der Inbusschraube 14 in gleicher Weise wie bei der ersten Ausführungsform ein hier nicht gezeigter Verriegelungsstift des Grundrahmens 30 in eine entsprechende Aussparung (nicht gezeigt) der Befestigungsplatte 38 eingeschwenkt werden. Damit wird verhindert, daß sich der Optikwechsler 1 unbeabsichtigt wieder aus dem Objektivrevolverträger 11 hinausbewegt.

Der Verriegelungsstift des Grundrahmens 30 bildet zusammen mit dem Grundrahmen 30, dem Aufnahmerahmen 31 und der ersten Andruckfeder 32 eine Halteeinheit, die das Optikelement 3 in der Sollposition hält.

Um den Optikwechsler 1 aus dem Objektivrevolverträger 11 herauszuziehen, muß lediglich der Verriegelungsstift aus der Aussparung mittels der Inbusschraube 14 herausgedreht werden. Aufgrund der Rückstellkraft der zweiten Andruckfeder 35, die beim Hineinschieben zusammengedrückt wurde, wird der Optikwechsler 1 aus dem Objektivrevolverträger 11 herausgedrückt, und kann dann entnommen werden, wobei aufgrund der Kurvenplatte 37 der Aufnahmerahmen 31 von der in Fig. 11 gezeigten Schwenkstellung in die in Fig. 9 und 10 gezeigte horizontale Stellung geschwenkt wird. In dieser Stellung übergreift dann das Anschlagelement 33 den Aufnahmerahmen 31 und dient als Anschlag, um die horizontale Grundstellung des Aufnahmerahmens 31 beizubehalten, so daß der Optikwechsler 1 durch den Einschubkanal 9 aus dem Objektivrevolverträger 11 herausgezogen werden kann.

Wie aus Fig. 9-12 ersichtlich ist, weist die Kurvenplatte 37 einen Befestigungsabschnitt 40 mit einem Langloch 41 auf. Damit ist die Position der Kurvenplatte 37 in Einschubrichtung relativ zur Befestigungsplatte 38 einstellbar, wodurch der Kippwinkel des Optikelementes 3 in der Stellung von Fig. 11 vorgegeben werden kann.

Ferner weist auch die Befestigungsplatte 38 ein Langloch 42 auf, so daß ihre Lage im Einschubkanal 9 in Längsrichtung einstellbar ist. Damit kann die Position des gekippten Optikelementes in Einschubrichtung in der in Fig. 11 gezeigten Endstellung vorgegeben werden.

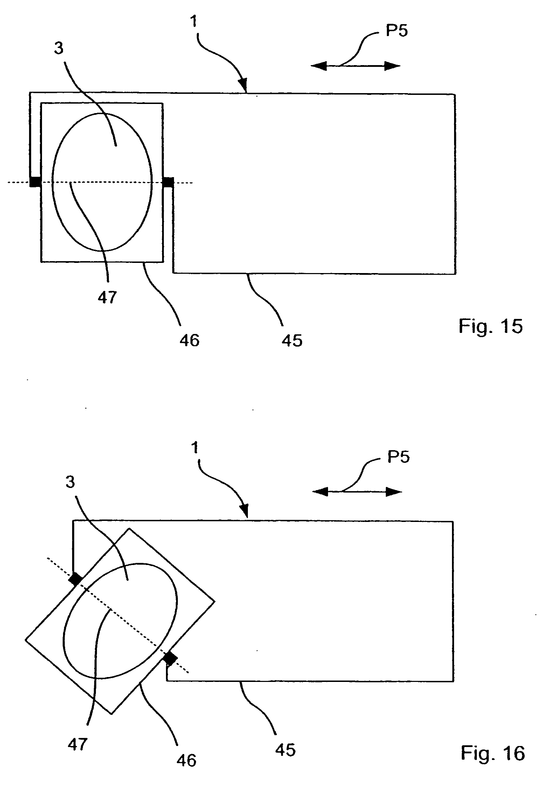

In Fig. 15 ist in Draufsicht eine weitere Ausführungsform des erfindungsgemäßen Optikwechslers 1 schematisch dargestellt. Der Optikwechsler 1 von Fig. 15 weist einen Grundrahmen 45 auf, der das in einem Aufnahmerahmen 46 gehaltertes Optikelement 3 trägt. Der Aufnahmerahmen 46 und somit das Optikelement 3 ist um eine Drehachse 47 drehbar mit dem Grundrahmen 45 verbunden. Die Drehachse 47 ist nicht, wie bei den bisher beschriebenen Ausführungsformen senkrecht zur Einschubrichtung, die durch den Doppelpfeil P5 angedeutet ist, ausgerichtet, sondern parallel zur Einschubrichtung. Diese Ausrichtung der Drehachse ist von Vorteil, wenn beispielsweise der Einschubkanal 9 und der Optikkanal K einen Winkel von 90° einschließen.

In Fig. 16 ist eine weitere Abwandlung des Optikwechslers 1 in einer ähnlichen Darstellung wie in Fig. 15 gezeigt, wobei gleiche Elemente mit gleichen Bezugszeichen bezeichnet sind und zu deren Beschreibung auf die obigen Ausführungen verwiesen wird. Bei dem Optikwechsler 1 von Fig. 16 ist der Aufnahmerahmen 46 so im Grundrahmen 45 gelagert, daß die Drehachse 47 einen Winkel von ca. 45° mit der Vorschubrichtung (Doppelpfeil P5) einschließt. Diese Ausbildung des Optikwechslers 1 kann insbesondere dann verwendet werden, wenn der Einschubkanal 9 und er Optikkanal K einen Winkel von 45° einschließen. Natürlich sind auch andere Winkel zwischen der Drehachse 47 und der Einschubrichtung P5 möglich. Die in Fig. 15 und 16 gezeigten Ausrichtungen der Drehachse 47 können bei den in Verbindung mit Fig. 1 -14 beschriebenen Optikwechslern vorgesehen werden.

## Patentansprüche

1. Optikwechsler zum Anordnen eines Optikelements in einer Sollposition in einem von außen über einen Einschubkanal zugänglichen Wechselraum einer Optikvorrichtung, mit einem Grundrahmen (2) und dem Optikelement (3), das über eine Schwenkmechanik schwenkbar am Grundrahmen befestigt ist,
wobei die Schwenkmechanik beim Einschieben des Optikwechslers (1) durch den Einschubkanal (9) in den Wechselraum (10) ab einer vorbestimmten Einschubtiefe eine Schwenkbewegung des Optikelements (3) so bewirkt, daß nach Abschluß des Einschiebens das Optikelement (3) in die Sollposition geschoben und geschwenkt ist.

2. Optikwechsler nach Anspruch 1, mit einer Führung für die Einschub- und/oder Schwenkbewegung.

3. Optikwechlser nach Anspruch 1 oder 2, mit einer Halteeinheit, die das Optikelement (3) in der Sollposition hält.

4. Optikwechsler nach Anspruch 3, bei dem die Halteeinheit das Optikelement (3) in der Sollposition gegen einen Anschlag des Optikwechslers drückt.

5. Optikwechsler nach Anspruch 4, bei dem die Schwenkmechanik beim Einschieben des Optikwechslers (1) bis zur vorbestimmten Einschubtiefe das Optikelement (3) in einer Verschiebelage arretiert und ab der vorbestimmten Einschubtiefe die Schwenkbewegung aus der Verschiebelage bewirkt.

6. Optikwechsler nach einem der obigen Ansprüche, wobei der Grundrahmen (2) zwei parallele Schenkel (23) aufweist, zwischen denen das Optikelement (3) so angeordnet ist, daß die Schwenkachse senkrecht zur Erstreckungsrichtung der beiden Schenkel (23) liegt.

7. Optikwechsler nach Anspruch 6, bei dem das Optikelement (3) in der Sollposition gegenüber einer Ebene, in der beide Schenkel (23) liegen, gekippt ist.

8. Optikwechsler nach einem der obigen Ansprüche, wobei die Schwenkachse parallel zur Einschubrichtung durch den Einschubkanal ist oder mit der Einschubrichtung einen Winkel aus dem Bereich größer 0° und kleiner gleich 90° einschließt.

9. Optikwechsler nach einem der obigen Ansprüche, wobei das Optikelement (3) in einem Aufnahmerahmen (4) angeordnet ist, der drei Anlageflächen (24) aufweist, die in der Sollposition an einer Führungsfläche (13) im Wechselraum (10) anliegen.

10. Optikwechsler nach einem der obigen Ansprüche, wobei das Optikelement (3) in einem Aufnahmerahmen (4) angeordnet ist, der relativ zum Grundrahmen längsverschieblich ist.

11. Optikvorrichtung, insbesondere Mikroskop, mit einem von außen über einen Einschubkanal (9) zugänglichen Wechselraum (10) und einem Optikwechsler (1) nach einem der obigen Ansprüche.

12. Verfahren zum Anordnen eines Optikelements in einer Sollposition in einem von außen über einen Einschubkanal zugänglichen Wechselraum einer Optikvorrichtung, bei dem das Optikelement von außen in den Einschubkanal geschoben und ab einer vorbestimmten Einschubtiefe ein weiteres Verschieben dazu führt, dass das Optikelement zusätzlich so verschwenkt wird, daß nach Abschluß des Einschiebens das Optikelement in die Sollposition geschoben und geschwenkt ist.

## Claims

1. An optics changer for arranging an optical element in a target position in a changer chamber of an optical apparatus accessible from the outside via an insertion channel, comprising a base frame (2) and the optical element (3) which is pivotably fastened to the base frame via a swivel mechanism, wherein the swivel mechanism effects a pivoting movement of the optical element (3) when the optics changer (1) is inserted through the insertion channel (9) in the changer chamber (10) starting at a predetermined insertion depth, such that after completing the insertion the optical element (3) has been pushed and pivoted to the target position.

2. An optics changer according to claim 1, comprising a guide for the insertion and/or swiveling movement.

3. An optics changer according to claim 1 or 2, comprising a holding unit which holds the optical element (3) in the target position.

4. An optics changer according to claim 3, wherein the holding unit presses the optical element (3) against the stop of the optics changer in the target position.

5. An optics changer according to claim 4, wherein the swivel mechanism arrests the optical element (3) in a displacement position during the insertion of the optics changer (1) up to the predetermined insertion depth and produces the swiveling movement from the displacement position from the predetermined insertion depth.

6. An optics changer according to one of the preceding claims, wherein the base frame (2) comprises two parallel legs (23), between which the optical element (3) is arranged in such a way that the swivel axis extends perpendicularly in relation to the direction of extension of the two legs (23).

7. An optics changer according to claim 6, wherein in the target position the optical element (3) is tilted in relation to a plane in which both legs (23) are disposed.

8. An optics changer according to one of the preceding claims, wherein the swivel axis is parallel to the direction of insertion through the insertion channel or encloses an angle from the range larger 0°or less than and equal to 90° with the insertion direction.

9. An optics changer according to one of the preceding claims, wherein the optical element is arranged in a receiving frame (4) which comprises three contact surfaces (24) which rest in the target position on a guide surface (13) in the changer chamber (10).

10. An optics changer according to one of the preceding claims, wherein the optical element (3) is arranged in a receiving frame (4) which is longitudinally displaceable relative to the base frame.

11. An optical apparatus, especially a microscope, comprising a changer chamber (10) which is accessible from the outside via an insertion channel (9) and an optics changer (1) according to one of the preceding claims.

12. A method for arranging an optical element in a target position in a changer chamber of an optical apparatus accessible from the outside via an insertion channel, wherein the optical element is pushed from the outside into the insertion channel and, from a predetermined insertion depth, a further pushing results in that the optical element is additionally swiveled in such a way that after the completion of the insertion the optical element has been pushed and swiveled to the target position.

## Revendications

1. Changeur d'optique destiné à disposer un élément d'optique dans une position prévue dans un espace de changement, accessible par l'extérieur au moyen d'un conduit d'introduction, d'un dispositif d'optique, comprenant un cadre de base (2) et l'élément d'optique (3), qui est fixé sur le cadre de base de façon à pouvoir basculer au moyen d'un mécanisme de basculement,
le mécanisme de basculement entraînant un mouvement de basculement de l'élément d'optique (3) lors de l'introduction du changeur d'optique (1) par le conduit d'introduction (9) dans l'espace de changement (10) à partir d'une profondeur d'introduction prédéfinie, de telle sorte que, une fois l'introduction terminée, l'élément d'optique (3) est poussé et basculé dans la position prévue.

2. Changeur d'optique selon la revendication 1, comprenant un guide pour le mouvement d'introduction et/ou le mouvement de basculement.

3. Changeur d'optique selon la revendication 1 ou 2, comprenant une unité de retenue, qui maintient l'élément d'optique (3) dans la position prévue.

4. Changeur d'optique selon la revendication 3, sur lequel l'unité de maintien appuie l'élément d'optique (3) dans la position prévue contre une butée du changeur d'optique.

5. Changeur d'optique selon la revendication 4, sur lequel le mécanisme de basculement arrête l'élément d'optique (3) dans une position de coulissement lors de l'introduction du changeur d'optique (1) jusqu'à la profondeur d'introduction prédéfinie et entraîne à partir de la profondeur d'introduction prédéfinie le mouvement de basculement à partir de la position de coulissement.

6. Changeur d'optique selon l'une quelconque des revendications précédentes, le cadre de base (2) présentant deux branches (23) parallèles, entre lesquelles l'élément d'optique (3) est disposé de telle sorte que l'axe de basculement est disposé perpendiculairement au sens d'extension des deux branches (23).

7. Changeur d'optique selon la revendication 6, sur lequel l'élément d'optique (3) est basculé dans la position prévue par rapport à un plan dans lequel les deux branches (23) sont situées.

8. Changeur d'optique selon l'une quelconque des revendications précédentes, l'axe de basculement étant parallèle au sens d'introduction par le conduit d'introduction ou formant avec le sens d'introduction un angle provenant de la plage supérieure à 0° et inférieure ou égale à 90°.

9. Changeur d'optique selon l'une quelconque des revendications précédentes, l'élément d'optique (3) étant disposé dans un cadre de logement (4) présentant trois surfaces d'appui (24), qui s'appuient dans la position prévue sur une surface de guidage (13) dans l'espace de changement (10).

10. Changeur d'optique selon l'une quelconque des revendications précédentes, l'élément d'optique (3) étant disposé dans un cadre de logement (4) qui est coulissant dans le sens longitudinal par rapport au cadre de base.

11. Dispositif d'optique, en particulier microscope, comprenant un espace de changement (10) accessible par l'extérieur au moyen d'un conduit d'introduction (9) et un changeur d'optique (1) selon l'une quelconque des revendications précédentes.

12. Procédé pour disposer un élément d'optique dans une position prévue dans un espace de changement, accessible par l'extérieur au moyen d'un conduit d'introduction, d'un dispositif d'optique, dans lequel l'élément d'optique est poussé par l'extérieur dans le conduit d'introduction et, à partir d'une profondeur d'introduction prédéfinie, un nouveau coulissement aboutit à ce que l'élément d'optique est basculé en supplément, de telle sorte que, une fois l'introduction terminée, l'élément d'optique est poussé et basculé dans la position prévue.
